# EUROPÄISCHE PATENTANMELDUNG

(11) **EP 1 906 352 A1**
(43) Veröffentlichungstag der Anmeldung: **02.04.2008**
(21) Anmeldenummer: 07111434.2
(22) Anmeldetag: 29.06.2007
(51) Int. Cl.: G06Q 50/00, G06Q 10/00, A01B 79/00

(54) **Vorrichtung und Verfahren zur Koordination eines Maschinenparks**

(30) Priorität: 22.09.2006 DE 102006045280
(71) Anmelder: CLAAS Selbstfahrende Erntemaschinen GmbH, 33428 Harsewinkel (DE)
(72) Erfinder: Wippersteg, Heinz-Hermann, 32257 Bünde (DE); Steckel, Thilo, 33330 Gütersloh (DE); Diekhans, Dr. Norbert, 33335 Gütersloh (DE); Fitzner, Werner, 48231 Warendorf (DE); Oetzel, Kai, 33649 Bielefeld (DE)

(57) **Zusammenfassung**

Eine Vorrichtung zur Koordination eines Maschinenparks umfasst einen Speicher zur Speicherung einer Vielzahl von Datensätzen (T), eine Schnittstelle für die Kommunikation mit einer Mehrzahl von Nutzern (N), die in der Lage sind, Änderungen an den Datensätzen (T) vorzunehmen, wobei jeder Datensatz (T) einen gegebenen Anteil der Arbeitskapazität einer Maschine des Maschinenparks repräsentiert und die Änderungen die Zuteilung des von dem Datensatz (T) repräsentierten Anteils der Arbeitskapazität an den die Änderung vornehmenden Nutzer (N) betreffen, und eine Verwaltungseinheit, die eingerichtet ist, eine Änderung eines Datensatzes (T) durch einen die Änderung anfordernden Nutzer (N) zuzulassen (S6), wenn der Datensatz (T) keinem anderen Nutzer zugeteilt ist (S2) und eine von dem anfordernden Nutzer (N) signalisierte Dringlichkeit (D) dar Änderung eine für den betreffenden Anteil (T) vorgegebene Schwelle (S(T)) erreicht (S5).

## Beschreibung

Die vorliegende Erfindung betrifft eine Vorrichtung und ein Verfahren zur Koordination eines Maschinenparks, insbesondere von mobilen landwirtschaftlichen Maschinen, die es erlauben, die Maschinen mit einem hohen Grad an Produktivität zu betreiben.

Spezialisierte landwirtschaftliche Maschinen wie etwa Erntemaschinen werden in einem landwirtschaftlichen Betrieb oft nur während einer kurzen Zeitspanne im Laufe eines Jahres benötigt, in der die Arbeit, für die die Maschine spezialisiert ist, anfällt. Um die Kapitalrendite zu verbessern, ist es für die Landwirte wirtschaftlich interessant, derartige Maschinen nicht selbst zu besitzen, sondern sich lediglich für die Zeit, in der Bedarf für sie besteht, den Zugriff darauf zu sichern, wobei die Maschinen sich im Besitz einer Genossenschaft, eines Lohnunternehmers oder dgl. befinden können.

Um diesen Zugriff zu organisieren, wird eine Datenaustauschvorrichtung benötigt, die es einem Nutzer ermöglicht, zu beurteilen, ob ein gewünschter Zugriff möglich ist, und die eine Zuteilung des Zugriffs bei effizienter Auslastung der Maschinen unterstützt.

Ein System, das den Austausch von Informationen zwischen Nutzern und mobilen landwirtschaftlichen Maschinen unterstützt, wobei es den Nutzern erlaubt, Änderungen an in dem System gespeicherten Informationen vorzunehmen, ist aus DE 102 45 169 A1 bekannt.

Aufgabe der Erfindung ist, ein solches System so weiterzuentwickeln, dass es einen Einsatz der mobilen Maschinen mit hoher Produktivität unterstützt.

Die Aufgabe wird gelöst, indem bei einer Vorrichtung zur Koordination eines Parks von mobilen landwirtschaftlichen Maschinen, die einen Speicher zur Speicherung einer Vielzahl von Datensätzen, eine Schnittstelle für die Kommunikation mit einer Mehrzahl von Nutzern und eine Verwaltungseinheit umfasst, die in der Lage ist, in Reaktion auf Anforderungen der Nutzer Änderungen an den Datensätzen vorzunehmen, jeder Datensatz einen gegebenen Anteil der Arbeitskapazität einer Maschine des Maschinenparks repräsentiert, dass die Änderungen die Zuteilung des von dem Datensatz repräsentierten Anteils der Arbeitskapazität an den die Änderung vornehmenden Nutzer betreffen und dass die Verwaltungseinheit eingerichtet ist, eine Änderung eines Datensatzes auf Anforderung durch einen Nutzer zuzulassen, wenn der Datensatz keinem anderen Nutzer zugeteilt ist und eine von dem anfordernden Nutzer signalisierte Dringlichkeit der Änderung eine für den betreffenden Anteil vorgegebene Schwelle erreicht.

Indem die nachfragende Einheit gezwungen ist, die Dringlichkeit ihrer Nachfrage zu quantifizieren, kann die Vorrichtung bei der Zuteilung jedes Datensatzes zu einem Nutzer nachfragende Nutzer, die nicht auf einen bestimmten Datensatz festgelegt sind, auf solche Datensätze verweisen, die von weniger flexiblen Nutzern nicht verwendet werden können, und so die größtmögliche Zahl von nachfragenden Nutzern befriedigen bzw. eine gute Auslastung der zu koordinierenden Maschinen gewährleisten.

Der Verwaltungseinheit ist zweckmäßigerweise eine Vorschrift zum Festlegen einer Entfernung zwischen zwei Datensätzen vorgegeben, die es der Verwaltungseinheit ermöglicht, festzustellen, ob sich ein gegebener Datensatz in der Nähe eines anderen Datensatzes befindet oder nicht, und die Verwaltungseinheit ist eingerichtet, die Schwelle anhand der Häufigkeit von zugeteilten Datensätzen unter in der Nähe des zu ändernden Datensatzes liegenden Datensätzen zu festzulegen. Anhand des Anteiles bereits zugeteilter Datensätze in der Nähe des nachgefragten Datensatzes kann die Vorrichtung dynamisch abschätzen, wie nötig der nachgefragte Datensatz von der nachfragenden oder von anderen externen Einheiten benötigt wird.

Zweckmäßigerweise entspricht jeder Datensatz einer Betriebszeitspanne einer Maschine des Maschinenparks. In diesem Fall ist die Entfernung zwischen zwei Datensätzen zweckmäßigerweise so definiert, dass sie mit zunehmendem Zeitabstand zwischen den Datensätzen anwächst.

Einer ersten bevorzugten Ausgestaltung zufolge ist die Verwaltungseinheit eingerichtet, den Anteil an bereits zugeteilten Datensätzen unter den in der Nähe eines gegebenen Datensatzes liegenden Datensätzen jeweils in vorgegebenen Zeitabständen von der dem gegebenen Datensatz entsprechenden Zeit zu ermitteln. Das heißt, zwischen zwei Ermittlungen des Auslastungsgrades ändert sich die Dringlichkeit, die ein Nutzer angeben muss, um einen angefragten Datensatz zugewiesen zu bekommen, nicht. Dies verbessert für den Nutzer die Vorhersagbarkeit des Anfrageergebnisses.

Einer alternativen bevorzugten Ausgestaltung zufolge ist die Verwaltungseinheit eingerichtet, den Anteil an bereits zugeteilten Datensätzen unter den in der Nähe eines gegebenen Datensatzes liegenden Datensätzen bei jeder Anfrage nach dem gegebenen Datensatz zu ermitteln. Bei dieser Ausgestaltung ist das Ergebnis einer Anfrage für den Nutzer zwar weniger vorhersehbar, andererseits kann jedoch ein verbesserter Auslastungsgrad der Maschinen erreicht werden.

Die Schwelle ist zweckmäßigerweise eine abnehmende Funktion des Zeitabstandes zwischen der gegenwärtigen und der dem Datensatz entsprechenden Zeit, das heißt bei gegebener Häufigkeit von zugeteilten Datensätzen in der Umgebung eines gegebenen Datensatzes ist die Schwelle um so niedriger, je näher in der Zukunft die dem gegebenen Datensatz entsprechende Zeitspanne liegt. So ist dafür gesorgt, dass unzugeteilt gebliebene Datensätze kurzfristig bevorzugt angefragt werden, und Zeitspannen, in denen die Maschinen ungenutzt bleiben, werden minimiert.

Wenn der Maschinenpark mehrere für eine gleiche Aufgabe geeignete Maschinen umfasst, ist die Entfernung zwischen zwei Datensätzen, die zwei für die gleiche Aufgabe geeigneten Maschinen zugeordnet sind, von der Identität der Maschinen unabhängig. Das heißt, wenn die Datensätze jeweils Betriebszeitspannen der Maschinen entsprechen, so ist die durch die Vorschrift festgelegte Entfernung zweier einer gleichen Betriebszeitspanne an zwei verschiedenen Maschinen zugeordneter Datensätze zu einem dritten Datensatz stets gleich.

Da sich die Dringlichkeit, mit der ein bestimmter Arbeitskapazitätsanteil einer Maschine von einem Nutzer benötigt wird, im Laufe der Zeit ändern kann, ist zweckmäßigerweise die Verwaltungseinheit eingerichtet, auf Anforderung eines Nutzers eine Zuordnung eines Datensatzes zu der externen Einheit aufzuheben und ihm einen neuen Datensatz zuzuordnen. Eine solche Neuzuordnung kann ohne weitere Anforderungen erfolgen, wenn die Schwelle für den neuen Datensatz niedriger ist als die für den ursprünglich zugeordneten Datensatz. Anderenfalls erfolgt die Neuzuordnung zweckmäßigerweise nur, wenn die dafür von der externen Einheit angegebene Dringlichkeit wenigstens so groß wie die Differenz zwischen der Schwelle für den neuen Datensatz und der für den ursprünglich zugeordneten Datensatz ist.

Um die Beurteilung der Dringlichkeit durch die verschiedenen Nutzer zu objektivieren und vergleichbar zu machen, kann ein Katalog von Kriterien festgelegt werden, deren Vorliegen oder Nicht-Vorliegen dezentral bei den Nutzern in objektiver Weise abgeprüft werden kann, und der eine Formel zum Berechnen eines quantitativen Dringlichkeitswertes anhand der Überprüfungsergebnisse spezifiziert. Dies ist insbesondere dann zweckmäßig, wenn die Nutzer Teile einer gleichen wirtschaftlichen Einheit sind oder aus anderen Gründen davon davon ausgegangen werden kann, dass die Nutzer vorbehaltlos miteinander kooperieren und keiner sich auf Kosten der anderen ungerechtfertigte Vorteile zu beschaffen versucht, oder wenn die Beurteilung der Dringlichkeit vollautomatisch ohne die Möglichkeit einer gezielten Einflussnahme von außen erfolgt. In Fällen, wo die Steuervorrichtung und der Maschinenpark einerseits und die Nutzer andererseits zu verschiedenen wirtschaftlichen Einheiten gehören, kann es zweckmäßig sein, die Dringlichkeit jeweils durch einen Geldbetrag zu messen, der für die Zuordnung der Maschinenkapazität an die externe Einheit vom Betreiber der letzteren an den Betreiber des Maschinenparks zu entrichten ist. Der Nutzer hat so die Möglichkeit, seine Betriebskosten frühzeitig zu planen, und er kann sie jederzeit optimieren, denn er kann abwägen, ob eventuelle Mehrkosten, die bei einer Buchung von Erntemaschinen zu einem Idealtermin oder bei einer Umbuchung im Vergleich zu einem anderen, suboptimalen Termin anfallen, durch Vorteile wie etwa zu erwartende höhere Erntemenge oder bessere Qualität des Ernteguts gerechtfertigt sind.

Die Aufgabe wird ferner gelöst durch ein Verfahren zur Koordination eines Maschinenparks mit den Schritten
- Bereitstellen einer Vielzahl von Datensätzen in einem Speicher, wobei jeder Datensatz einen gegebenen Anteil der Arbeitskapazität einer Maschine des Maschinenparks repräsentiert;
- Empfangen einer Anforderung eines Nutzers nach Änderung eines Datensatzes, wobei die Änderung die Zuteilung des von dem Datensatz repräsentierten Anteils der Arbeitskapazität an den die Änderung anfordernden Nutzer betrifft;
- Vornehmen der angeforderten Änderung, wenn der Datensatz keinem anderen Nutzer zugeteilt ist und eine von dem anfordernden Nutzer signalisierte Dringlichkeit der Änderung eine für den betreffenden Anteil vorgegebene Schwelle erreicht

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Maschinenparks mit einer erfindungsgemäßen Koordinationsvorrichtung;
- Fig. 2 und 3: Schemata von Datensätzen in dem Speicher der Steuervorrichtung zu verschiedenen Zeiten zur Erläuterung eines ersten Verfahrens zum Berechnen einer Schwelle;
- Fig. 4: und 5 zu Fig. 2 und 3 analoge Schemata zur Erläuterung eines zweiten Verfahrens zur Berechnung einer Schwelle;
- Fig. 6: ein Schema zur Erläuterung eines dritten Verfahrens;
- Fig. 7: ein Schema zur Erläuterung eines vierten Verfahrens;
- Fig. 8: ein Flussdiagramm zur Erläuterung eines von der Koordinationsvorrichtung ausgeführten Verfahrens zur Zuteilung eines Datensatzes an einen Nutzer; und
- Fig. 9: ein Flussdiagramm zur Erläuterung eines Verfahrens zur Änderung der Zuteilung eines Datensatzes.

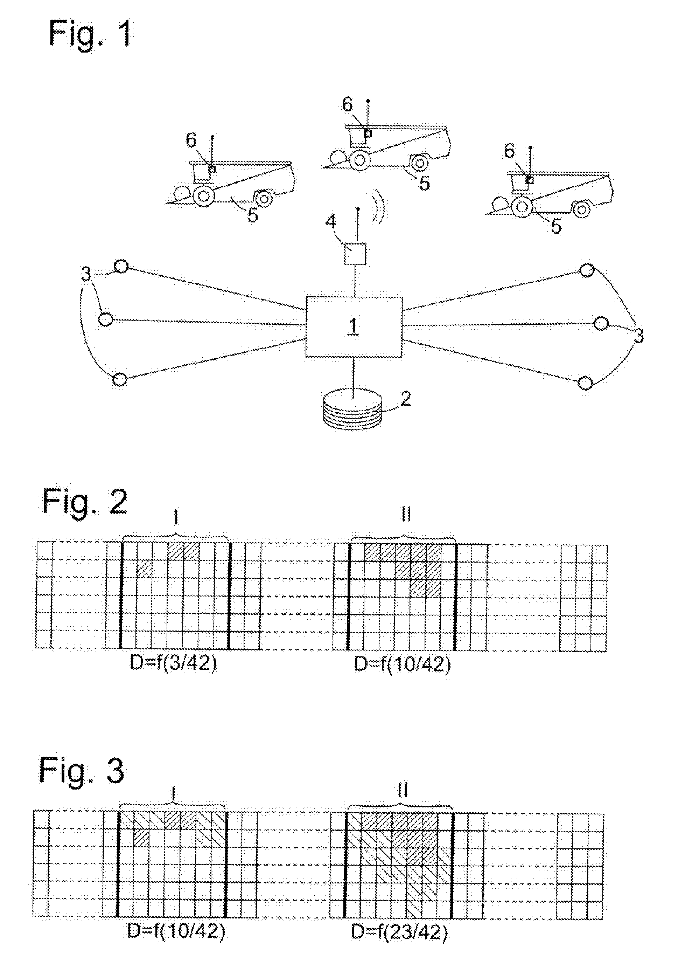

Fig. 1 zeigt ein Blockdiagramm der erfindungsgemäßen Koordinationsvorrichtung und ihrer Einsatzumgebung. Eine Verwaltungseinheit 1, die als ein geeignet programmierter Computer realisiert sein kann, ist mit einem Datenspeicher 2 und mit einer Mehrzahl von Benutzer-Endgeräten 3 verbunden. Als Infrastruktur für die Verbindungen zu den Endgeräten 3 kann in an sich bekannter Weise ein öffentliches oder privates Fernmeldenetz, ein Computernetz oder dergleichen dienen.

Die Verwaltungseinheit 1 ist ferner verbunden mit einer Funkschnittstelle 4, die die Kommunikation mit einer Mehrzahl von Maschinen 5 eines Maschinenparks ermöglicht. Die Maschinen 5 können durch von der Verwaltungseinheit 1 über die Funkschnittstelle 4 übermittelte Anweisungen direkt fernsteuerbar sein; im Falle von Maschinen wie den hier als Beispiel dargestellten Mähdreschern, die nicht sinnvoll vollständig zu automatisierende Aufgaben erledigen, kann sich die Steuerung durch die Verwaltungseinheit 1 darauf beschränken, Arbeitsanweisungen an ein in der Maschine 5 mitgeführtes Datensichtgerät 6 zu übermitteln, so dass eine Bedienungsperson der Maschine 5 die Anweisungen zur Kenntnis nehmen und mit Hilfe der Maschine 5 ausführen kann.

Als ein Anwendungsbeispiel der erfindungsgemäßen Koordinationsvorrichtung soll im folgenden die Planung einer Erntekampagne betrachtet werden, wobei sich versteht, dass die Koordinationsvorrichtung auch auf anderen Gebieten einsetzbar ist, wo es darum geht, innerhalb einer gegebenen Zeitspanne beschränkt verfügbare Ressourcen so an eine Mehrzahl von Benutzern zu verteilen, dass einerseits ein hoher Nutzungsgrad der Ressourcen erreicht wird und andererseits die Anforderungen der Nutzer optimal erfüllt werden.

Ein Problem bei der Planung einer Erntekampagne ist, dass eine voraussichtliche Erntezeit und Erntemenge und damit Zeit und Umfang des Bedarfs für Erntemaschinen im Voraus nur grob abgeschätzt werden kann, da der exakte optimale Erntezeitpunkt und die dann zu erntende Menge von einer Reihe von Unwägbarkeiten abhängen, die erst im Laufe des Fruchtwachstums oder gar nur wenige Tage vor dem tatsächlichen Erntetermin bekannt werden. So kann sich aufgrund von Temperatur- und Niederschlagsschwankungen während der Wachstumszeit der tatsächliche Reifezeitpunkt gegenüber einem langjährigen Mittelwert um etliche Tage vor oder zurück verschieben, und auch die zu erntende Menge kann nach oben oder unten von einem erwarteten Wert abweichen. So ist es zwar einerseits sinnvoll, bereits zu einem frühen Zeitpunkt Maschinenkapazität zum Abernten einer gegebenen Anbaufläche einzuplanen, um sicherzustellen, dass die Maschinenkapazität zur Verfügung steht, andererseits ist, je früher der Planungszeitpunkt liegt, die Wahrscheinlichkeit umso größer, dass die eingeplante Zeit und Maschinenkapazität den Anforderungen nicht optimal genügt.

Die erfindungsgemäße Koordinationsvorrichtung trägt diesem Problem Rechnung, indem sie von einem Nutzer 3, der für einen bestimmten Zeitraum ein Kontingent an Kapazität der Maschinen 5 für sich reservieren will, eine Angabe der Dringlichkeit einer solcher Reservierung verlangt und die Reservierung nur vornimmt, wenn die angegebene Dringlichkeit eine von der Verwaltungseinheit 1 festgelegte Schwelle erreicht. Als ein Kriterium zur Quantifizierung der Dringlichkeit kann zum Beispiel die Differenz zwischen den erwarteten Ernteerträgen am zur Reservierung angeforderten Zeitpunkt und einem zum Beispiel eine Woche früher oder später liegenden Zeitpunkt angenommen werden. Auch die vom Erntezeitpunkt abhängige Qualität des Ernteguts kann berücksichtigt werden. Je früher der Zeitpunkt der Reservierung ist, umso kleiner ist die bereits zu diesem Zeitpunkt prognostizierbare Differenz, und umso niedriger ist dementsprechend die Dringlichkeit der Reservierung. Je später die Reservierung vorgenommen wird, umso genauer kann der Nutzer eine erwartete Differenz prognostizieren, und dementsprechend höher ist auch die von ihm angegebene Dringlichkeit. In dem praktisch bedeutsamen Fall, dass die Nutzer 3 einerseits und der Betreiber der Maschinen 5 andererseits wirtschaftlich voneinander unabhängigen Einheiten angehören und der Betreiber der Maschinen 5 von den Nutzern 3 für deren Einsatz mit Geld entlohnt wird, kann die Dringlichkeit auch auf einfache Weise durch einen Geldbetrag quantifiziert werden, den ein Nutzer für den Einsatz der Maschinen zum gewünschten Zeitpunkt zu entrichten bereit ist.

Wie wirtschaftlich die Maschinen eingesetzt werden, hängt entscheidend ab von der Schwelle der Dringlichkeit, die erreicht werden muss, damit eine Reservierung von Maschinenkapazität erfolgt. Eine einfache Möglichkeit ist, der Verwaltungseinheit 1 eine Vorschrift vorzugeben, die Schwelle der Dringlichkeit allein in Abhängigkeit von Datum, für welches Kapazität reserviert werden soll, und dem Zeitabstand zwischen zu reservierendem Datum und Zeitpunkt der Reservierung festlegt. Eine solche Vorschrift wird im Allgemeinen für eine Reservierung innerhalb eines aus Erfahrung zu erwartenden Erntezeitraums eine hohe Schwelle und für einen Reservierungszeitraum außerhalb des erwarteten Erntezeitraums eine niedrige Schwelle festlegen, wobei die für einen gegebenen Reservierungszeitraum in vorgegebener Weise zunimmt, je näher dieser Reservierungszeitraum rückt. Wenn ein Kapazitätskontingent bis kurz vor seinem Termin unreserviert geblieben ist, kann für dieses die Schwelle wieder herabgesetzt werden, um die Wahrscheinlichkeit zu erhöhen, dass es kurzfristig reserviert wird und die entsprechende Maschine so kontinuierlicher ausgelastet wird.

Ein solches Verfahren kann jedoch klimatische Umstände während der Wachstumszeit, die sich auf Erntezeitpunkt und -menge auswirken, nicht befriedigend berücksichtigen. Vorschriften für die Festlegung der Schwelle, die dies ermöglichen, sollen im folgenden anhand von Ausführungsbeispielen dargestellt werden.

Zu diesem Zweck zeigt Fig. 2 eine schematische Darstellung des Inhalts des Datenspeichers 2 zu einem Zeitpunkt, in dem die voraussichtliche Erntezeit eines mit den Maschinen 5 einzubringenden Erntegutes noch weit in der Zukunft liegt. Die Darstellung zeigt eine Vielzahl von jeweils einem Datensatz des Speichers 2 entsprechenden Kästchen, die in einer Matrix mit einer Vielzahl von Zeilen und Spalten angeordnet sind. Jede Spalte entspricht einer bestimmten Zeitspanne, zum Beispiel einem Tag, und jede Zeile ist einer der Maschinen 5 zugeordnet. Falls der Maschinenpark Maschinen 5 von unterschiedlicher Leistung umfasst, können einer leistungsfähigeren Maschinen auch mehrere Zeilen des Diagramms zugeordnet sein, so dass jede Zeile in etwa einer bestimmten Arbeitsleistung einer Maschine, wie zum Beispiel einer bestimmten Zahl von Tonnen Erntegut, entspricht.

Der Übersichtlichkeit halber sind in dem Diagramm der Fig. 2 jeweils sieben Spalten durch dicke Begrenzungsstriche zu einer Woche zusammengefasst. Durch Schraffur einzelner Kästchen des Diagramms ist symbolisiert, dass die von den Kästchen repräsentierte Arbeitskapazität bereits einem der Nutzer 3 zugeteilt ist. Von den hier insgesamt 42 Kästchen einer Woche sind im Falle der früheren Woche I drei, im Falle der späteren Woche II 42 zugeteilt. Offensichtlich liegt also die Woche II näher an einem Zeitraum, der von den Nutzern 3 als optimal eingeschätzt wird. Um die Dringlichkeit D festzulegen, die ein Nutzer 3 angeben muss, um ein Kästchen für sich zu reservieren, ermittelt die Verwaltungseinheit 1 den Auslastungsgrad der Maschinen einer gegebenen Woche, das heißt sie ermittelt das Verhältnis von reservierten Kästchen zur Gesamtzahl der Kästchen für diese Woche und setzt das erhaltene Verhältnis als Argument in einer Funktion f ein, die eine zunehmende Funktion dieses Verhältnisses ist. Ein Nutzer, der eine Anbaufläche in klimatisch günstiger Lage abzuernten hat, die in der Regel einen verhältnismäßig frühen Reifezeitpunkt hat, wird so dazu veranlasst, unter zwei Erntezeitpunkten in der Woche I oder II, die für ihn gleichen Ertrag erwarten lassen, eher den Zeitpunkt in der Woche I zu wählen, so dass in der Woche II Zeit für andere Nutzer 3 verfügbar bleibt, für die ein Erntezeitpunkt in der Woche I ungeeignet ist.

Fig. 3 zeigt die Belegung des Datenspeichers 2 zu einem späteren Zeitpunkt, wobei seit dem in Fig. 2 dargestellten Zeitpunkt hinzugekommene Reservierungen durch eine schwächere Schraffur der entsprechenden Kästchen gekennzeichnet sind. Der Auslastungsgrad in der Woche I hat nun den gleichem Wert 10/42 wie die Woche II in Fig. 2 erreicht, so dass nun für eine Reservierung in der Woche I die gleiche Dringlichkeit spezifiziert werden muss wie zm Zeitpunkt der Fig. 2 für eine Reservierung in der Woche II. Die Auslastung der letzteren hat hier einen Wert 23/42 erreicht, so dass auch hier die für eine Reservierung anzugebende Dringlichkeit höher ist als im Fall der Fig. 2.

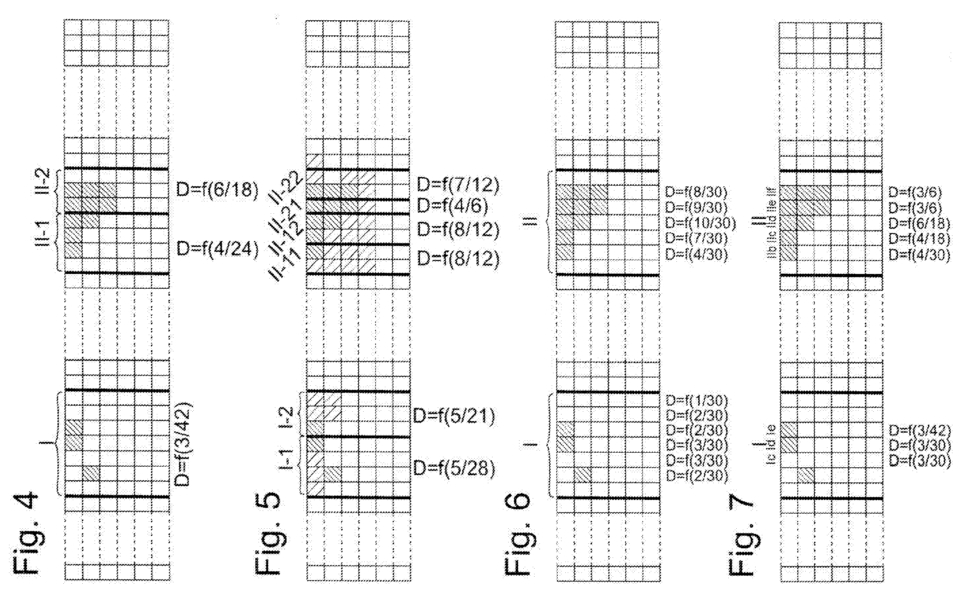

Eine auf eine feste Zeitspanne wie etwa eine Woche bezogene Berechnung des Auslastungsgrades, wie in den Fig. 2, 3 dargestellt, kann zu unbefriedigenden Ergebnissen führen, wenn die Zeitspanne, in welcher die Nachfrage der Nutzer 3 nach den Maschinen 5 ihr Maximum erreicht, deutlich kürzer ist als diese feste Zeitspanne. Eine solche Situation kann sich insbesondere dann ergeben, wenn Regenfälle in einer Region während des Erntezeitraums absehbar sind und die Nutzer 3 in der Region ein hohes Interesse daran haben, dass ihre Flächen vor dem Regen abgeerntet werden. Ein Verfahren zur Ermittlung des Auslastungsgrades, das diesem Problem Rechnung trägt, ist in den Fig. 4 und 5 dargestellt. Diese zeigen wiederum den Inhalt des Datenspeichers 2 zu jeweils den gleichen Zeitpunkten wie in Fig. 2 und 3. Wenn die Zahl der gebuchten Kästchen in einer Zeitspanne wie etwa der Woche I oder II einen vorgegebenen Grenzwert, zum Beispiel 10, erreicht hat, nimmt die Verwaltungseinheit 1 eine Unterteilung der entsprechenden Zeitspanne in zwei Teilzeitspannen, hier die Teilzeitspannen II-1, II-2 im Falle der Woche II, vor, wobei sie die Grenze zwischen den Teilzeitspannen so legt, dass die Zahl der zugeteilten Kästchen in den zwei Teilzeitspannen sich möglichst wenig unterscheidet. So wird im vorliegenden Fall die Teilzeitspanne II-1, die die ersten vier Tage der Woche II umfasst und einen Auslastungsgrad 4/24 aufweist, und die die restlichen drei Tage der Woche umfassende Teilzeitspanne 11-2 mit einer Auslastung 6/18 erhalten. Um ein weiteres Kästchen in dem Teilzeitspanne II-2 zu reservieren, muss ein Nutzer 3 folglich eine höhere Dringlichkeit angeben als für eine Reservierung in der Teilzeitspanne II-1.

In Fig. 5 haben die fortschreitenden Reservierungen gemäß dem oben geschilderten Verfahren zur Unterteilung der Woche I in Teilzeitspannen I-1, I-2 sowie der Teilzeitspannen II-1, II-2 in Unterintervalle II-11, II-12, II-21, II-22 geführt, deren Auslastungsgrad jeweils getrennt ermittelt wird.

Ein Verfahren zur Festlegung der Schwelle D, das von einer Unterteilung des Kalenders in Wochen unabhängig ist, ist in Fig. 6 veranschaulicht. Die dargestellten Reservierungen sind wiederum dieselben wie in Fig. 2. Die Ermittlung des Auslastungsgrades erfolgt hier für jeden Kalendertag einzeln, indem die reservierten Kästchen des betreffenden Kalendertages sowie der zwei vorhergehenden und der zwei nachfolgenden zusammengezählt und durch die Gesamtzahl der diesen fünf Tagen entsprechenden Kästchen dividiert werden. Dabei werden jeweils die in der Fig. für die einzelnen Tage eingetragenen Auslastungen erhalten.

Um kurzfristige Auslastungsspitzen in ähnlicher Weise wie im Verfahren der Fig. 4, 5 zu berücksichtigen, kann als Weiterbildung des Verfahrens vorgesehen werden, dass, wenn die Gesamtzahl der an einem zu reservierenden Tag und dem vorhergehenden und nachfolgenden Tag bereits reservierten Kästchen einen Grenzwert überschreitet, nur noch diese drei Tage bei der Berechnung des Auslastungsgrades berücksichtigt werden, oder dass wenn die Zahl der Reservierungen an dem zu reservierenden Tag einen zweiten, höheren Grenzwert überschreitet, die Auslastung nur anhand der Reservierungen dieses einen Tages festgelegt wird.

Ein weiteres Verfahren zur Festlegung des Auslastungsgrades wird anhand von Fig. 7 erläutert. Um den Auslastungsgrad eines gegebenen Tages festzulegen, wird das kleinste symmetrische Intervall um den betreffenden Tag gebildet, das eine vorgegebene Zahl von reservierten Kästchen, zum Beispiel drei Stück, enthält. Bei den Tagen Ic, Id der Woche I ist das die Mindestzahl von drei Reservierungen enthaltende Zeitintervall fünf Tage lang, so dass sich für diese Tage eine Auslastung von 3/30 ergibt; im Falle des Tages Ie sind es sieben Tage, entsprechend einer Auslastung von 3/42. In der Woche II ist das Zeitintervall für den Tag IIb fünf Tage lang und enthält vier Reservierungen, entsprechend einer Auslastung von 4/30; für die Tage IIc, IId ergibt sich jeweils ein drei Tage langes Intervall mit Auslastungen von 4/18 bzw. 6/18, und für die Tage IIe und IIf ist das Intervall jeweils einen Tag lang, mit einer Auslastung von 3/6.

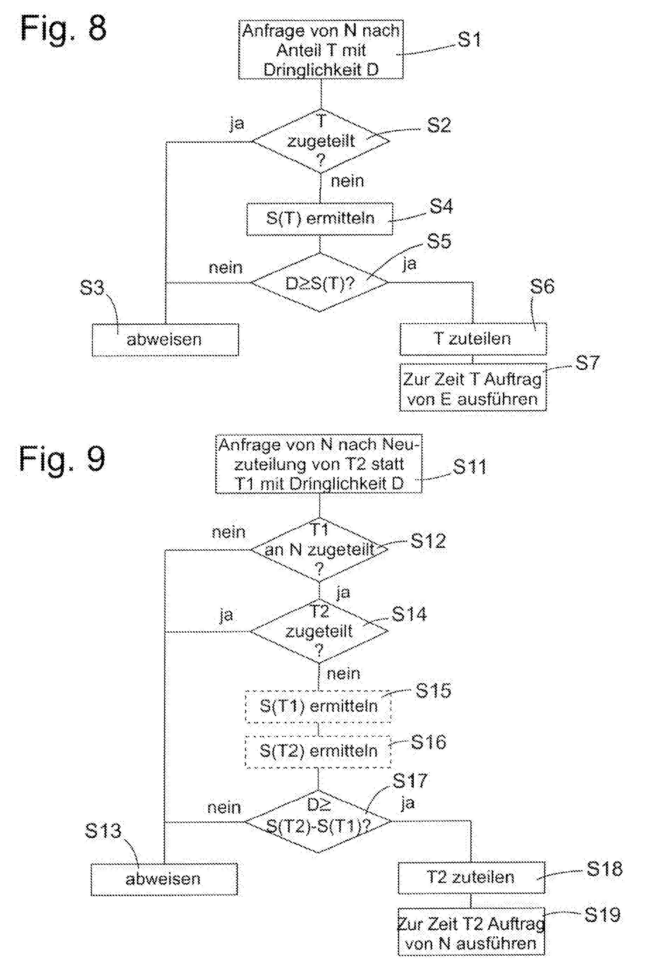

Ein Arbeitsverfahren der Verwaltungsvorrichtung 2, das mit einem beliebigen der oben beschriebenen Verfahren zur Festlegung der Auslastung anwendbar ist, ist in Fig. 8 als Flussdiagramm dargestellt. In Schritt S1 empfängt die Verwaltungseinheit 1 von einem Nutzer N bzw. dessen Endgerät 3 eine Anfrage, diesem Nutzer N einen Anteil T der Arbeitskapazität der Maschinen 5 zu reservieren, wobei der Anteil zumindest durch eine Zeiteinheit, etwa einen Kalendertag, an dem die Arbeitskapazität benötigt wird, sowie eventuell durch eine Angabe der gewünschten Maschine 5 definiert ist. Der Anteil entspricht also einem oder mehreren der in den Fig. 2 bis 7 dargestellten Kästchen oder Datensätze. Der übersichtlicheren Beschreibung wegen wird im Folgenden angenommen, dass der Anteil T genau einem Datensatz entspricht, wobei die Verallgemeinerung auf mehrere Datensätze keine Schwierigkeiten bereitet. Die Verwaltungseinheit 2 prüft zunächst in Schritt S2, ob der betreffende Anteil T bereits einem anderen Nutzer zugeteilt ist. Wenn ja, muss die Anfrage von N in Schritt S3 abgewiesen werden.

Wenn der Anteil T noch keinem Benutzer zugeteilt ist, ermittelt die Verwaltungseinheit in Schritt S4 eine Schwelle S(T) für die Dringlichkeit, die die Anfrage des N haben muss, damit der Anteil T für ihn reserviert werden kann. Diese Ermittlung kann erfolgen, indem die Verwaltungseinheit 2 jeweils zum Zeitpunkt des Schritts S4 den dem nachgefragten Anteil T entsprechenden Auslastungsgrad anhand eines der oben mit Bezug auf Fig. 2 bis 7 beschriebenen Verfahren ermittelt und die Schwelle S(T) als eine monoton steigende Funktion f des Auslastungsgrades zur Zeit dieses Anteils T berechnet. Eine alternative Möglichkeit ist, den Auslastungsgrad für die Zeit des Anteils T jeweils zu bestimmten Zeiten oder in vorgegebenen Zeitabständen von der dem Anteil T entsprechenden Zeit zu ermitteln und die in diesem Auslastungsgrad entsprechende Schwelle S(T) in einer Tabelle zu speichern. In einem solchen Fall bleibt die Schwelle S(T) zwischen zwei Aktualisierungszeitpunkten unverändert, so dass ein Nutzer die für eine erfolgreiche Reservierung erforderliche Dringlichkeit D besser vorab einschätzen kann.

Anschließend vergleicht die Verwaltungseinheit 2 die von dem Nutzer N gemeldete Dringlichkeit D mit der in Schritt 4 festgelegten Schwelle S(T) in Schritt S5. Wenn die vom Nutzer N angegebene Dringlichkeit D wenigstens so groß wie die Schwelle S(T) ist, wird der betreffende Arbeitszeitanteil T dem Nutzer in Schritt S6 zugeteilt, und rechtzeitig zu der dem Anteil T entsprechenden Zeit sendet die Verwaltungseinheit in Schritt S7 eine Anweisung an eine der Maschinen 5, die gewünschte Arbeit für den Nutzer N auszuführen.

Ein Nutzer, der bereits zu einem frühen Zeitpunkt Arbeitskapazitätsanteile reserviert und damit dem Betreiber der Maschinen 3 Planungssicherheit gibt, wird dafür belohnt, indem er nur eine relativ geringe Dringlichkeit für eine erfolgreiche Reservierung benötigt. Ein Nutzer 3, der vor dem Reservieren lange abwartet, muss das Risiko in Kauf nehmen, dass seine Anforderung nicht erfüllt wird, weil keine verfügbare Arbeitskapazität mehr vorhanden ist, oder dass sie nur bei hoher Dringlichkeit erfüllt wird.

Eine frühe Reservierung von Arbeitskapazität beinhaltet für den Nutzer N das Risiko, dass sich die reservierte Zeit oder Kapazität zu einem späteren Zeitpunkt als nicht bedarfsgemäß erweist, sei es, weil die tatsächlich zu erwartenden Erntemengen von den zum Zeitpunkt der Reservierung geschätzten erheblich abweichen, oder weil sich im Nachhinein ein anderer als der ursprünglich reservierte Zeitraum als zweckmäßiger erweist. Um diesem Problem Rechnung zu tragen, kann die Verwaltungseinheit 1 ausgelegt sein, um zusätzlich zum Verfahren der Fig. 8 auch das im folgenden mit Bezug auf Fig. 9 beschriebene Verfahren auszuführen. Hier empfängt die Verwaltungseinheit 2 in einem ersten Schritt S11 eine Anfrage des Nutzers N, für den bereits ein Arbeitszeitanteil T1 reserviert ist, statt dessen eine Reservierung für einen anderen Arbeitszeitanteil T2 vorzunehmen. Die Verwaltungseinheit überprüft zunächst in Schritt S12, ob der in der Anfrage angegebene Anteil T1 tatsächlich dem Nutzer N zugeteilt ist. Wenn nein, muss die Anfrage in Schritt S13 abgewiesen werden, da nur derjenige Nutzer über den Anteil T1 verfügen kann, für den dieser tatsächlich reserviert ist . Wenn der Anteil T1 tatsächlich dem Nutzer N zugeteilt ist, wird als nächstes in Schritt S14 geprüft, ob der Anteil T2 irgend einem Nutzer zugeteilt ist. Wenn ja, kann die Anfrage ebenfalls nur in Schritt S13 abgewiesen werden. Wenn nein, erfolgt in den Schritten S15, S16 die Ermittlung der Schwelle S(T1) beziehungsweise S(T2) für den Anteil T1 beziehungsweise T2. Wie oben mit Bezug auf Schritt S4 beschrieben, kann die Ermittlung anhand eines zum Zeitpunkt dieser Schritte S15, S16 ermittelten Auslastungsgrades oder anhand eines unabhängig von der Anfrage zu einem früheren Zeitpunkt ermittelten Auslastungsgrades erfolgen.

Schritt S17 vergleicht die in der Anfrage von Schritt S11 angegebene Dringlichkeit D mit der Differenz zwischen den Schwellen S(T2) und S(T1), Wenn die Schwelle für T2 niedriger liegt als für T1, d.h. wenn die Nachfrage für den Arbeitszeitanteil T2 kleiner ist als für T1, ist eine Änderung der Reservierung im allgemeinen auch für den Betreiber der Maschinen 3 nützlich, so dass in Schritt S18 der Anteil T2 für den Nutzer N reserviert wird und die Reservierung für den Anteil T1 aufgehoben wird. Das gleiche geschieht, wenn die Schwelle S für den Anteil T2 höher liegt als für T1, die angegebene Dringlichkeit D aber wenigstens so groß wie die Differenz der Schwellen S(T2)-S(T1) ist. Eine Anweisung, Arbeit für den Nutzer N auszuführen, wird in Schritt S19 rechtzeitig vor der dem Anteil T2 entsprechenden Zeit an eine der Maschinen 3 geschickt.

## Patentansprüche

1. Vorrichtung zur Koordination eines Maschinenparks, mit einem Speicher (2) zur Speicherung einer Vielzahl von Datensätzen (T, T1, T2), einer Schnittstelle für die Kommunikation mit einer Mehrzahl von Nutzern (3, N), und einer Verwaltungseinheit, die in der Lage ist, in Reaktion auf Anforderungen der Nutzer Änderungen an den Datensätzen (T, T1, T2) vorzunehmen, **dadurch gekennzeichnet, dass** jeder Datensatz (T, T1, T2) einen gegebenen Anteil der Arbeitskapazität einer Maschine (5) des Maschinenparks repräsentiert, dass die Änderungen die Zuteilung des von dem Datensatz (T, T1, T2) repräsentierten Anteils der Arbeitskapazität an den die Änderung anfordernden Nutzer (3, N) betreffen und dass die Verwaltungseinheit (1) eingerichtet ist, eine Änderung eines Datensatzes (T, T1, T2) auf Anforderung eines Nutzers (3, N) vorzunehmen (S6, S18), wenn der Datensatz (T, T1, T2) keinem anderen Nutzer zugeteilt ist (S2, S14) und eine von dem anfordernden Nutzer (N) signalisierte Dringlichkeit (D) der Änderung eine für den betreffenden Anteil (T, T1, T2) vorgegebene Schwelle (S(T), (S(T2)-S(T1)) erreicht (S5, S17).

2. Vorrichtung nach Anspruch 1, **dadurch gekennzeichnet, dass** der Verwaltungseinheit (1) eine Vorschrift zum Festlegen einer Entfernung zwischen zwei von Datensätzen vorgegeben ist und dass die Verwaltungseinheit eingerichtet ist, die Schwelle (S(T), (S(T2)-S(T1)) anhand der Häufigkeit von zugeteilten Datensätzen unter in der Nähe des zu ändernden Datensatzes (T, T1, T2) liegenden Datensätzen zu festzulegen.

3. Vorrichtung nach Anspruch 2, **dadurch gekennzeichnet, dass** jeder Datensatz (T, T1, T2) einer Betriebszeitspanne einer Maschine (5) des Maschinenparks entspricht und dass die Entfernung ein Maß für den Zeitabstand zwischen zwei Datensätzen darstellt.

4. Vorrichtung nach Anspruch 3, **dadurch gekennzeichnet, dass** die Verwaltungseinheit (1) eingerichtet ist, die Häufigkeit von zugeteilten Datensätzen unter in der Nähe eines gegebenen Datensatzes (T, T1, T2) liegenden Datensätzen jeweils in vorgegebenen Zeitabständen von der dem Datensatz entsprechenden zeit zu ermitteln (S4, S15, S16).

5. Vorrichtung nach Anspruch 3, **dadurch gekennzeichnet, dass** die Verwaltungseinheit eingerichtet ist, die Häufigkeit von zugeteilten Datensätzen unter in der Nähe eines gegebenen Datensatzes (T, T1, T2) liegenden Datensätzen bei jeder Anfrage nach dem gegebenen Datensatz zu ermitteln (S4, S15, S16).

6. Vorrichtung nach einem der Ansprüche 3 bis 5, **dadurch gekennzeichnet, dass** die Schwelle (S) eine abnehmende Funktion des Zeitabstandes zwischen der Gegenwart und der dem Datensatz (T, T1, T2) entsprechenden Zeit ist.

7. Vorrichtung nach einem der vorhergehenden Ansprüche, **dadurch gekennzeichnet, dass** der Maschinenpark mehrere für eine gleiche Aufgabe geeignete Maschinen (5) umfasst und dass die Entfernung zwischen zwei Datensätzen, die zwei für die gleiche Aufgabe geeigneten Maschinen (5) zugeordnet sind, von der Identität der Maschinen (5) unabhängig ist.

8. Vorrichtung zur Koordination eines Parks von mobilen landwirtschaftlichen Maschinen, mit einem Speicher (2) zur Speicherung einer Vielzahl von Datensätzen (T, T1, T2), einer Schnittstelle für die Kommunikation mit einer Mehrzahl von Nutzern (3, N), und einer Verwaltungseinheit (1), die in der Lage ist, in Reaktion auf Anforderungen der Nutzer Änderungen an den Datensätzen (T, T1, T2) vorzunehmen, insbesondere Vorrichtung nach einem der vorhergehenden Ansprüche, **dadurch gekennzeichnet, dass** jeder Datensatz (T, T1, T2) einen gegebenen Anteil der Arbeitskapazität einer Maschine (5) des Maschinenparks repräsentiert, dass jedem Datensatz (T, T1, T2) eine Schwelle (S) zugeordnet ist, dass die Änderungen die Zuteilung des von dem Datensatz (T, T1, T2) repräsentierten Anteils der Arbeitskapazität an den die Änderung vornehmenden Nutzer (3, N) betreffen und dass die Verwaltungseinheit (1) eingerichtet ist, auf Anforderung eines Nutzers (3, N) eine Zuordnung eines Datensatzes (T1) zu diesem Nutzer aufzuheben und ihm einen neuen Datensatz (T2) zuzuordnen, wenn die Schwelle (S(T2)) für den neuen Datensatz (T2) niedriger ist als die (S(T1)) für den ursprünglich zugeordneten Datensatz (T1).

9. Vorrichtung nach einem der vorhergehenden Ansprüche, **dadurch gekennzeichnet, dass** die Verwaltungseinheit (1) eingerichtet ist, auf Anforderung eines Nutzers (N) eine Zuordnung eines Datensatzes (T1) zu diesem Nutzer (N) aufzuheben und ihm einen neuen Datensatz (T2) zuzuordnen, wenn die für die Neuzuordnung angegebene Dringlichkeit (D) wenigstens so groß wie die Differenz zwischen der Schwelle (S(T2)) für den neuen Datensatz (T2) und der Schwelle (S(T1)) für den ursprünglich zugeordneten Datensatz (T1)ist.

10. Vorrichtung nach einem der vorhergehenden Ansprüche, **dadurch gekennzeichnet, dass** die Maschinen (5) des Maschinenparks mobile landwirtschaftliche Maschinen sind.

11. Verfahren zur Koordination eines Maschinenparks, mit den Schritten
- Bereitstellen einer Vielzahl von Datensätzen (T, T1, T2) in einem Speicher (2), wobei jeder Datensatz (T, T1, T2) einen gegebenen Anteil der Arbeitskapazität einer Maschine (5) des Maschinenparks repräsentiert;
- Empfangen (S6, S18) einer Anforderung eines Nutzers (3, N) nach Änderung eines Datensatzes (T, T1, T2), wobei die Änderung die Zuteilung des von dem Datensatz (T, T1, T2) repräsentierten Anteils der Arbeitskapazität an den die Änderung anfordernden Nutzer (3, N) betrifft;
- Vornehmen der angeforderten Änderung, wenn der Datensatz (T, T1, T2) keinem anderen Nutzer zugeteilt ist (S2, S14) und eine von dem anfordernden Nutzer (N) signalisierte Dringlichkeit (D) der Änderung eine für den betreffenden Anteil (T, T1, T2) vorgegebene Schwelle (S(T), (S(T2)-S(T1)) erreicht (S5, S17).

12. Verfahren nach Anspruch 11, bei dem
- die Häufigkeit von zugeteilten Datensätzen unter in der Nähe des zu ändernden Datensatzes (T, T1, T2) liegenden Datensätzen ermittelt wird und
- die Schwelle (S(T), (S(T2)-S(T1)) anhand der Häufigkeit festgelegt wird.

13. Verfahren nach Anspruch 12, bei dem jeder Datensatz (T, T1, T2) einer Betriebszeitspanne einer Maschine (5) des Maschinenparks entspricht und dass anhand des Zeitabstand zwischen dem zu ändernden Datensatz und einem anderen Datensatz entschieden wird, ob der andere Datensatz in der Nähe des zu ändernden Datensatzes liegt.

14. Verfahren nach Anspruch 13, bei dem die Häufigkeit von zugeteilten Datensätzen unter in der Nähe eines gegebenen Datensatzes liegenden Datensätzen zu vorgegebenen Zeitpunkten ermittelt wird und bei einer Anfrage nach Änderung des gegebenen Datensatzes die Schwelle anhand der zuletzt ermittelten Häufigkeit festgelegt wird.

15. Verfahren nach Anspruch 13, bei dem bei einer Anfrage nach Änderung eines gegebenen Datensatzes zunächst die Häufigkeit von zugeteilten Datensätzen unter in der Nähe des gegebenen Datensatzes liegenden Datensätzen ermittelt wird und dann anhand der ermittelten Häufigkeit die Schwelle festgelegt wird.

16. Verfahren nach einem der Ansprüche 13 bis 15, **dadurch gekennzeichnet, dass** die Schwelle (S) eine abnehmende Funktion des Zeitabstandes zwischen der Gegenwart und der dem Datensatz (T, T1, T2) entsprechenden Zeit ist.

17. Verfahren nach einem der Ansprüche 11 bis 16, **dadurch gekennzeichnet, dass** die Beurteilung, ob von zwei Datensätzen, die zwei für die gleiche Aufgabe geeigneten Maschinen (5) zugeordnet sind, der eine in der Nähe des anderen liegt, von der Identität der Maschinen (5) unabhängig ist.

18. Verfahren zur Koordination eines Parks von mobilen landwirtschaftlichen Maschinen, insbesondere nach einem der Ansprüche 11 bis 17, mit den Schritten:
Bereitstellen einer Vielzahl von Datensätzen (T, T1, T2) in einem Speicher (2), wobei jeder Datensatz (T, T1, T2) einen gegebenen Anteil der Arbeitskapazität einer Maschine (5) des Maschinenparks repräsentiert;
- Empfangen (S6, S18) einer Anforderung eines Nutzers (3, N), eine Zuordnung eines Datensatzes (T1) zu diesem Nutzer aufzuheben und ihm einen neuen Datensatz (T2) zuzuordnen;
- Vornehmen der angeforderten Änderung, wenn der neue Datensatz (T2) keinem anderen Nutzer zugeteilt ist (S2, S14) und wenn eine vorgegebene Schwelle (S(T2), S(T1)) für den neuen Datensatz (T2) niedriger ist als für den ursprünglich zugeordneten Datensatz (T1),

19. Verfahren nach einem der Ansprüche 11 bis 18, bei dem auf Anforderung eines Nutzers (3, N) eine Zuordnung eines Datensatzes (T1) zu diesem Nutzer aufgehoben und ihm einen neuer Datensatz (T2) zugeordnet wird, wenn die für die Neuzuordnung angegebene Dringlichkeit (D) wenigstens so groß wie die Differenz zwischen der Schwelle (S(T2)) für den neuen Datensatz (T2) und der Schwelle (S(T1)) für den ursprünglich zugeordneten Datensatz (T1) ist.

20. Verfahren nach einem der Ansprüche 11 bis 19, **dadurch gekennzeichnet, dass** die Maschinen (5) des Maschinenparks mobile landwirtschaftliche Maschinen sind.
